Europäisches Patentamt

European Patent Office

Office européen des brevets

(11) Veröffentlichungsnummer: **0 188 201**

**A1**

(12) **EUROPÄISCHE PATENTANMELDUNG**

(21) Anmeldenummer: **86100091.7**

(22) Anmeldetag: **07.01.86**

(51) Int. Cl.⁴: **G 03 B 15/00**
**G 03 B 27/46**

(30) Priorität: **12.01.85 DE 3500884**

(43) Veröffentlichungstag der Anmeldung:
**23.07.86 Patentblatt 86/30**

(84) Benannte Vertragsstaaten:
**FR GB IT**

(71) Anmelder: **AGFA-GEVAERT Aktiengesellschaft**

**D-5090 Leverkusen 1(DE)**

(72) Erfinder: **Kochmann, Heike, Dipl.-Ing.**
**Dewetstrasse 5**
**D-8000 München 40(DE)**

(72) Erfinder: **Müller, Jürgen, Dipl.-Ing.**
**Bozzarisstrasse 7**
**D-8000 München 90(DE)**

(54) **Lichtabdichtung zwischen einer verschiebbaren Abbildungseinheit und einer festen Trägerplatte in einer Vorrichtung zur Herstellung fotografischer Aufnahmen.**

㉗ Eine Lichtabdichtung zwischen einer in einer Koordinatenrichtung (X) verschiebbaren Abbildungseinheit und einer eine über den möglichen Verschiebebereich der Abbildungen der Abbildungseinheit reichende Belichtungsöffnung aufweisenden, festen Trägerplatte, hinter der eine Filmbühne gelagert ist, in einer Vorrichtung zur Herstellung fotografischer Aufnahmen von auf einem Bildschirm eines Monitors erscheinenden Röntgen- oder Ultraschall- oder dergleichen Bildern, wobei die Abbildungseinheit ein zwischen dem Bildschirm und der Filmbühne einstellbares Objektiv und ein den Raum zwischen Bildschirm und Trägerplatte lichtdicht abschließendes Gehäuseteil aufweist, ist so ausgebildet, daß längs beider zur Verschieberichtung (X) senkrechten, trägerplattenseitigen Kanten des Gehäuseteils (36 bzw. 23) über die Belichtungsöffnung (35a) hinaus reichende, lichtdichte Bahnen oder Tücher (37) befestigt sind, die auf gegenläufig vorgespannte Walzen (40) bei Verschiebung des Gehäuseteils (36 bzw. 23) auf- bzw. abwickelbar sind, und daß längs der in Verschieberichtung (X) verlaufenden Ränder der Tücher (37) biegsame Streifen (44) aus magnetisierbarem Material befestigt sind, denen Permanentmagnetstreifen (43) an der Trägerplatte (35) gegenüberliegen. Dadurch wird erreicht, daß die Tücher mit ihren in Verschieberichtung verlaufenden Rändern stets glatt an der Trägerplatte anliegen.

FIG. 1

AGFA-GEVAERT
Aktiengesellschaft

D-5090 Leverkusen 1

Patentabteilung

eh-se

# Lichtabdichtung zwischen einer verschiebbaren Abbildungseinheit und einer festen Trägerplatte in einer Vorrichtung zur Herstellung fotografischer Aufnahmen

Die Erfindung betrifft eine Lichtabdichtung zwischen einer in einer Koordinatenrichtung (X) verschiebbaren Abbildungseinheit und einer eine über den möglichen Verschiebebereich der Abbildungen der Abbildungseinheit reichende Belichtungsöffnung aufweisenden, festen Trägerplatte, hinter der eine Filmbühne gelagert ist, in einer Vorrichtung zur Herstellung fotografischer Aufnahmen von auf einem Bildschirm eines Monitors erscheinenden Röntgen- oder Ultraschall- oder dergleichen Bildern, wobei die Abbildungseinheit ein zwischen dem Bildschirm und der Filmbühne einstellbares Objektiv und ein den Raum zwischen Bildschirm und Trägerplatte lichtdicht abschließendes Gehäuseteil aufweist.

A-G 5016

Vorrichtungen ähnlicher Art sind in den nicht vorveröffentlichten deutschen Patentanmeldungen P 34 18 960.2-51 und P 34 32 258.2-51 beschrieben, wobei die Filmbühne in zur Verschieberichtung der Abbildungseinheit und des Objektivs senkrechter Richtung zusätzlich verschiebbar ist. Die Filmbühne befindet sich dabei in einem lichtdicht verschlossenen Raum, wobei die Lichtabdichtung zwischen der Abbildungseinheit und der Filmbühne bzw. einer dazwischen angeordneten festen Platte in Verschieberichtung der Abbildungseinheit über den ganzen Verschiebebereich wirksam sein muß.

Der Erfindung liegt die Aufgabe zugrunde, eine Lichtabdichtung der eingangs genannten Art so auszubilden, daß sie unter Verwendung einfacher und platzsparender konstruktiver Mittel funktionssicher ist und insbesondere bei Verschiebung der Abbildungseinheit längs der Lichtabdichtung bzw. der Trägerplatte keine Spalte durch Aufwölbungen oder Aufklaffen der Lichtabdichtungen entstehen können.

Diese Aufgabe wird erfindungsgemäß gelöst durch die Merkmale des Hauptanspruchs. Weitere vorteilhafte Merkmale der Erfindung sind den Unteransprüchen entnehmbar.

Die Erfindung wird anhand von Zeichnungen näher erläutert. Es zeigen

A-G 5016

Fig.1     eine perspektivische Darstellung einer erfindungsgemäßen Lichtabdichtung,

Fig.2     einen Schnitt duch die Lichtabdichtung nach

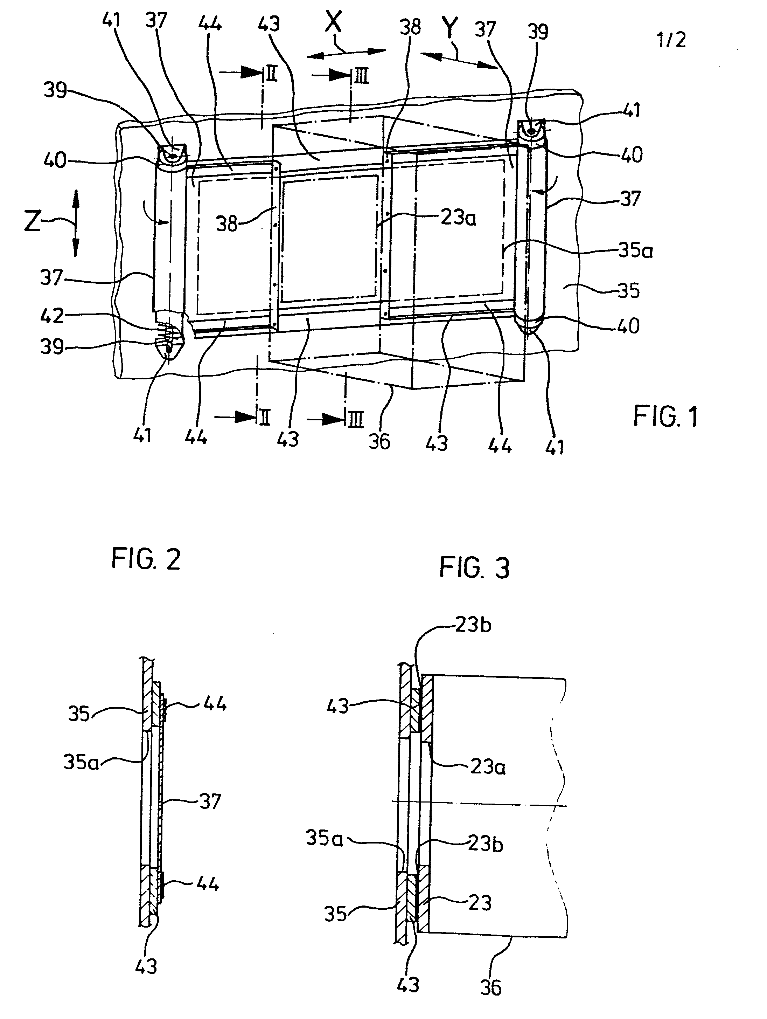

              Fig.1 gemäß der Schnittlinie II-II,

Fig.3     einen Schnitt durch die Lichtabdichtung nach
              Fig.1 gemäß der Schnittlinie III-III,

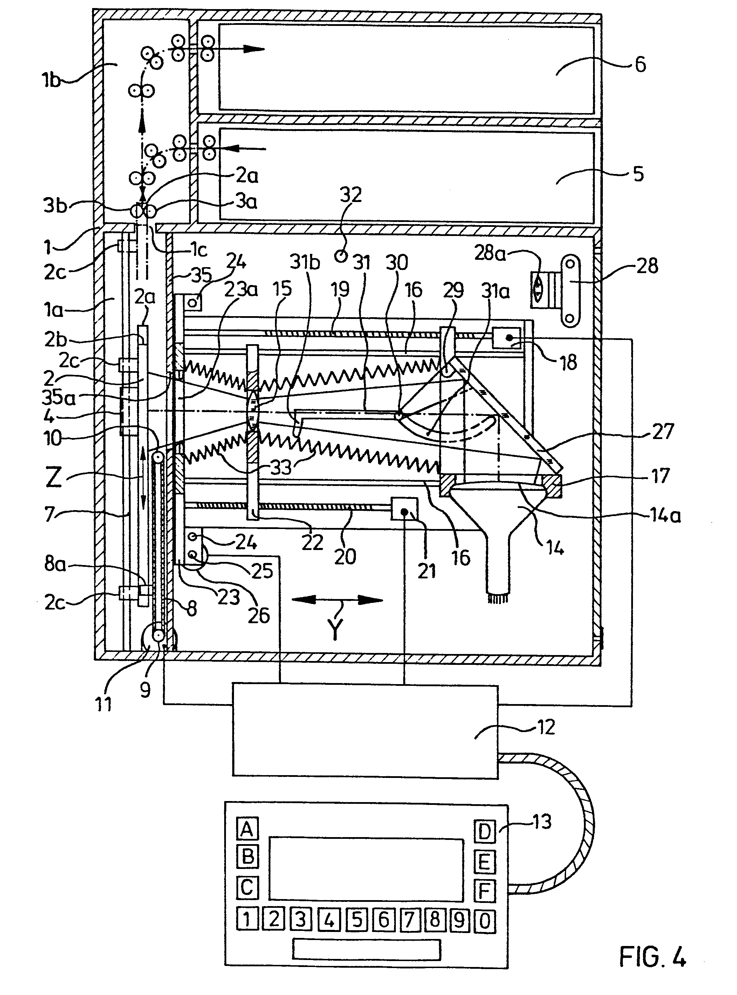

Fig.4     eine schematische Darstellung eines bereits
              vorgeschlagenen Gerätes der eingangs genannten
              Art unter Verwendung einer Lichtabdichtung nach
              den Fig.1 bis 3.

In Figur 4 ist ein vorgeschlagenes Blattfilmaufnahmegerät gezeigt, in dem eine erfindungsgemäße Lichtabdichtung verwendbar ist. Dabei sind ein schematisch
dargestelltes Gerätegehäuse mit 1, dessen fotografischer Aufnahmeteil mit 1a und dessen Filmbe- und -ent-
ladeteil mit 1b und ein Durchtrittsschlitz zwischen dem
Aufnahmeteil 1a und dem Filmbe- und -entladeteil 1b mit
1c bezeichnet. Der Durchtrittsschlitz 1c erstreckt sich
in Richtung einer Koordinate, nämlich der X-Koordinate,
entsprechend der Breite einer Filmbühne 2 und weist in
der hierzu und zur Verschieberichtung Z der Filmbühne 2
senkrechten Richtung Y eine Breite auf, die ausreichend
ist, daß die ihm zugewandte Oberkante 2a der Filmbühne 2 bis in den Bereich des Transportwalzenpaares 3a,
3b vom Aufnahmeteil 1a in den Be- und Entladeteil 1b
hineingeschoben werden kann. Die Filmbühne 2 weist eine
bekannte Ansaugeinrichtung 4 und bekannte Ansauglöcher

A-G 5016

auf, durch die ein auf die Aufnahmeseite der Filmbühne 2 aufgebrachtes Filmblatt in der durch die vertikale Lage der Filmbühne 2 vorgegebenen vertikalen Stellung sicher gehalten werden kann. Die Oberkante 2a der Filmbühne 2 weist in bestimmten Abständen Ausschnitte 2b auf, während die Transportwalzen 3a, 3b, die bereits im Be- und Entladeteil 1b liegen, in mehrere Walzenpaarstücke 3a, 3b von etwas weniger als der Breite der Ausschnitte 2b aufgeteilt sind und an den Stellen in Richtung X liegen, an denen auch die Ausschnitte 2b liegen. Die Filmbühne 2 ist in später genauer zu beschreibender Weise in vertikaler Richtung, nämlich in Z-Richtung, auf- und abwärts verschiebbar, wobei in ihrer obersten Be- und Entladestellung in ihre Ausschnitte 2b der untere Teil der Walzenpaarstücke 3a, 3b eingreift.

Im Be- und Entladeteil 1b sind in an sich bei Röntgenaufnahmegeräten oder Kassettenbe- und -entladegeräten bekannter Weise Einschübe 5 und 6 oder noch weitere Einschübe vorhanden, von denen mindestens der eine Einschub 5 ein Blattfilmvorratsmagazin mit Transportmitteln zum Transportieren eines Films zu den Walzenpaarstücken 3a, 3b enthält. Entsprechend dem Einschub 5 sind in bekannter und der Einfachheit halber nicht gezeigter Weise weitere hierzu parallele, gleichartige Einschübe vorgesehen für andere Filmformate. Der zweite Einschub 6 kann ein Zwischenmagazin darstellen zum lichtdichten Einführen von belichtetem Film ebenfalls mittels der Walzenpaarstücke 3a, 3b. Genausogut kann aber auch als weiterer Teil im Anschluß an den Be- und Entladeteil 1b direkt eine Entwicklungsmaschine vorge-

A-G 5016

sehen sein. In bekannter Weise sind alle diese Vorrats- oder Zwischenmagazine und ggf. die Entwicklungsmaschine einerseits in ihrer Funktionsstellung lichtdicht ausgeführt. Da dies aber an sich bekannt und auf
jede bekannte Weise ausführbar und für die vorliegende
Erfindung nicht wesentlich ist, sind ohne Bezugsziffern
in Figur 4 nur noch die vor bzw. nach den Walzenpaarstücken 3a, 3b vorgesehenen weiteren Transportwalzenpaare schematisch angedeutet. Zum Be- bzw. Entladen
wird die Filmbühne 2 bis in ihre oberste, strichpunktiert angedeutete Stellung bewegt, wobei dann zu entladender Film, der in den Ausschnitten 2b zugänglich
liegt, unter Abschaltung der Ansaugvorrichtung durch
die Walzenpaarstücke 3a, 3b erfaßt und dem Zwischenmagazin 6 bzw. der Entwicklungsmaschine zugeführt wird.
Umgekehrt wird neu einzuführender Film dem Vorratsmagazin entnommen und wieder über die Walzenpaarstücke 3a,
3b der Filmbühne 2 zugeführt. Wenn er dort seine richtige Lage einnimmt, tritt die Ansaugvorrichtung 4 wieder in Funktion, und die Filmbühne 2 wird in ihre Arbeitsstellung heruntergefahren.

Für die Lagerung der Filmbühne 2 ist jede für eine bekannte, exakte Parallelverschiebung in einer Richtung
geeignete, schritt- oder abschnittweise antreibbare mechanische oder mechanisch-elektrische Verschiebevorrichtung verwendbar. Beim gezeigten Ausführungsbeispiel
sind an der Bühnenrückseite mehrere Arme 2c mit exakten
Bohrungen vorgesehen, die an wenigstens zwei parallelen
Stangen, von denen nur eine Stange 7 sichtbar ist, vertikal verschiebbar sind. Ein Zahnriemenantrieb 8 oder

A-G 5016

Seilzug ist über zwei Rollen 9, 10 mittels eines Elektromotors 11 von einer Steuerschaltung 12 aus um bestimmte Wegstrecken antreibbar und an einer Stelle 8a mit der Filmbühne 2 verbunden, so daß bei Bewegung des Zahnriemens oder Seilzugs 8 die Filmbühne 2 um entsprechende Stücke aufwärts bzw. abwärts in Richtung Z mitgenommen wird. Die entsprechenden Wegstrecken richten sich nach der an einer Wähltastatur 13 vorgewählten Funktion, wobei beispielsweise bei einer möglichen Einteilung und Größe der aufzunehmenden Bilder die Filmbühne 2 in Z-Richtung je Spalte sechs gleiche Schritte, z.B. zuerst nach aufwärts für die erste Aufnahmenspalte und dann wieder nach abwärts für die zweite Aufnahmenspalte und wieder nach aufwärts für die dritte Aufnahmenspalte und wieder nach abwärts für die vierte Aufnahmenspalte ausführt. Bei entsprechend anders aufgeteilten, vorwählbaren Aufnahmefeldeinteilungen sind die Schritte der Filmbühne 2 in Z-Richtung entsprechend anders programmiert. Die Bühne 2 führt dabei nur eine Auf- oder Abwärtsbewegung in Z-Richtung durch.

Um nun Aufnahmen auf dem Film nicht nur in vertikalen Spalten, sondern auch in horizontalen Reihen, also in X-Richtung nebeneinander und außerdem in verschiedenen Größen aufnehmen zu können, ist ein Monitor 14, dessen Bildschirm 14a abfotografiert werden soll, in den beiden zur Verschieberichtung Z der Filmbühne 2 senkrechten Richtungen X und Y verschiebbar gelagert. Der Bildschirm 14a könnte dabei parallel zur Filmbühne 2 und zwischen beiden könnte einstellbar ein Aufnahmeobjektiv 15 angeordnet sein. Gemäß dem gezeigten Ausführungsbeispiel liegt jedoch der abzufotografierende Bildschirm 14a horizontal nach oben gerichtet in der X-Y-Ebene. Der Monitor 14 ist dabei an in Y-Richtung verlaufenden parallelen Trägerstangen 16 eines Rahmens 17 mit nicht näher gezeigten Bohrungen verschiebbar, und zwar mittels einer über einen zweiten Elektromotor 18 angetriebenen Spindel 19. An den Führungsstangen 16 ist auch das Objektiv 15 mittels einer weiteren Spindel 20 verschiebbar geführt. Die weitere Spindel 20 ist durch einen dritten Elektromotor 21 antreibbar. Die Steuerung der einer gewählten oder programmierten Vergrößerung bzw. Verkleinerung einer Bildschirmaufnahme entsprechenden Lage von Objektiv 15 und Bildschirm 14a in Y-Richtung erfolgt wiederum über die Steuerschaltung 12 entsprechend dem in der Wähltastatur 13 ausgewählten Programm. Die Führungsstangen 16 mit den Trägern 17 und 22 für Monitor 14 und Objektiv 15 sind an einer zur Filmbühne 2 parallelen, ein Belichtungsfenster oder eine Bildfeldblende 23a aufweisenden Platine 23 gehalten, die ihrerseits an in X-Richtung verlaufenden, im Gehäuse 1 befestigten Führungsstangen 24 in X-Richtung verschiebbar gelagert und durch eine dritte Spindel 25 mittels eines vierten Elektromotors 26 schrittweise von Bild zu Bild jeder Bildzeile verschiebbar ist. Auch dieser vierte Elektromotor 26 wird durch die Steuerschaltung 12 entsprechend einem geplanten Programm gesteuert.

Die Einstellung einer Vergrößerung bzw. Verkleinerung der abzufotografierenden Bildschirmbilder erfolgt also durch entsprechende Verschiebung von Objektiv 15 und

A-G 5016

Bildschirm 14a in Y-Richtung, das Aufnehmen der Bilder in einer vertikalen Spalte durch Verschieben der Filmbühne 2 in Z-Richtung bei stillstehendem Bildschirm 14a und das Aufnehmen der Bilder in einer horizontalen Spalte durch Verschieben des Bildschirms 14a zusammen mit dem Objektiv 15 in X-Richtung bei stillstehender Filmbühne 2.

Nachdem gemäß dem gezeigten Ausführungsbeispiel der Bildschirm 14a horizontal liegt, muß zwischen Bildschirm 14a und Objektiv 15 ein gegenüber beiden um 45$^o$ geneigter Umlenkspiegel 27 zusammen mit dem Bildschirm 14a verschiebbar gelagert sein. Um diesen Spiegel 27 einerseits reinigen zu können und andererseits in eine weitere Stellung schwenken zu können, in der er gemäß Fig. 2 eine um 90$^o$ gedrehte Stellung zum Abbilden des Bildschirmbildes durch das Objektiv 28a einer Rollfilmkammera 28 auf deren Filmebene einnimmt, ist der Umlenkspiegel 27 in dem Monitorträgerrahmen 17 um eine Achse 29 schwenkbar gelagert. Die zur Achse 29 parallele, dieser entfernter liegende Kante des Spiegels 27 liegt unter der Wirkung der Schwerkraft in der normalen Stellung für Planfilmaufnahmen auf dem Rand des Monitors 14 oder einem Anschlag auf. An wenigstens einem in einer Y-Z-Ebene liegenden Winkel des Spiegels 27 ist ein in X-Richtung verlaufender Steuerstift 30 angeordnet, der in eine gerätefeste Schlitzkurve 31 eingreift. In ihrem einen Endbereich 31a, in dem der Spiegel 27 am weitesten von der Filmbühne 2 entfernt ist, ist die Schlitzkurve 31 als Kreisbogen um die Drehachse 29 ausgebildet, so daß der Spiegel 27 aus

A-G 5016

der Stellung nach Fig. 4 entgegen dem Uhrzeigersinn durch einen angedeuteten, verschließbaren Deckel des Gehäuses nach oben zu Reinigungszwecken von Hand schwenkbar ist. An ihrem filmbühnennahen Ende weist die Schlitzkurve 31 ein kleines Kurvenstück 31b auf, das so geformt ist, daß der Spiegel 27 beim Weiterbewegen des Monitors 14 über dessen Endstellung für Planfilmaufnahmen hinaus in die um 90° entgegen dem Uhrzeigersinn nach oben geneigte Stellung bis zu einem Anschlag 32 hochgeschwenkt wird. In dieser Stellung wird das Bildschirmbild des Monitors 14 dann in das Objektiv 28a der Rollfilmkamera 28 geworfen. Diese ist ebenfalls durch den oder einen weiteren Gehäusedeckel zugänglich und auf diese Weise oder mittels einer Fernbedienungsvorrichtung bedienbar. Sie ist auf irgend eine bekannte Weise im Gerät 1 bzw. im Aufnahmeraum 1a lösbar befestigt. Zwischen Planfilmbühne 2, Objektiv 15 und Trägerarmen 17 für den Motor sind naturgemäß lichtdichte Balgen 33 vorgesehen.

Wie bereits beschrieben, befindet sich die Filmbühne 2 in einem lichtdichten Gehäuseteil und erhält Licht nur durch die Abbildung des Bildschirms mittels des Objektivs 15, bzw. es soll nur entsprechend deren Einstellung in X- und Y-Richtung das jeweilige Bild aufbelichtet werden. Es darf also kein Steulicht von dem die Abbildungseinheit 14, 27, 15, 33 umgebenden, durch den rückwärtigen Deckel zugänglichen Raum in den Filmbühnenraum fallen. Daher wird, wie Fig.4 entnehmbar ist, unmittelbar hinter der Platine 23 und vor der Filmbühne 2 eine Hauptträgerplatte 35 fest und lichtdicht mit

A-G 5016

dem die Gehäuseteile la und lb teilenden Wandteil ld und den übrigen benachbarten Gehäuseteilen verbunden. Diese Hauptträgerplatte 35 ist in den Fig.1 bis 3 abgebrochen samt der darin vorgesehenen großen Abbildungsöffnung 35a gesondert dargestellt. Die große, feste Abbildungsöffnung 35a ist etwas höher als die in X-Richtung bewegliche Bildfeldblende 23a und in X-Richtung so breit, wie die größte Ausdehnung eines Filmblattes in der Filmbühne 2 in dieser Richtung sein kann. Sie ermöglicht also die Belichtung eines Films in der Filmbühne 2 in jeder der möglichen Stellungen der Abbildungseinheit 14, 27, 15, 33. Zweckmäßigerweise wird die Abbildungseinheit 14, 27, 15, 33 von einem lichtdichten Gehäusekasten 36 umschlossen, der mit der Platine 23 in X-Richtung verschiebbar ist. Dieser Gehäusekasten 36 ist der Übersichtlichkeit halber in Fig.4 nicht eingezeichnet und in Fig.1 als vor der Hauptträgerplatte 35 liegend nur strichpunktiert und schematisch dargestellt. Seine hauptträgerplattenseitige Stirnseite wird durch die Platine 23 mit Bildfeldblende 23a gebildet. Die Lichtabdichtung zwischen der oberen bzw. unteren Kante der Bildfeldblende 23a und der oberen bzw. unteren Kante der großen Abbildungsöffnung 35a wird durch außen an die Platine 23 angeklebte Filz- oder Plüschstreifen 23b oder dergleichen bewirkt, die in Fig.3 angedeutet sind.

Es kommt nun darauf an, den veränderlichen Bereich der großen Abbildungsöffnung 35a beiderseits des verschiebbaren Gehäusekastens 36 nach Fig.1 bzw. des Balges 33 bzw. der Platine 23 nach Fig.4 sicher und mit einfachen

A-G 5016

Mitteln lichtdicht zu verschließen. Hierzu sind an die in Z-Richtung verlaufenden Kanten 38 der Platine 23 bzw. der filmbühnenseitigen Öffnung des Gehäusekastens 36 je ein in X-Richtung verlaufendes, lichtdichtes Rolltuch 37 lichtdicht befestigt. Als Befestigungsmittel kommen eine Verklebung mit Rändern der Kanten 38 oder ein Verkleben und Klemmen zwischen diese Ränder und je eine zuzätzliche Deckleiste oder ein Einkleben in an den Kanten 38 vorgesehenen Nuten oder jede andere bekannte lichtdichte und ausreißsichere Verbindung in Frage. Die Rolltücher 37 können aus schwarzem gummiähnlichem Material oder lichtundurchläßigem Kunststoff oder schwarzen Geweben oder Metalljalousien, wie beides bisher bei fotografischen Schlitzverschlüssen bekannt ist, bestehen und müssen, ebenso wie die Rolltücher bei Schlitzverschlüssen, aufrollbar sein. Beiderseits in X-Richtung außerhalb der großen Abbildungsöffnung 35a sind um in Z-Richtung verlaufende Achsen 39 drehbare Walzen oder Wickelrollen 40 drehbar gelagert, an denen je das andere Ende eines Rolltuchs 37 befestigt ist. Die Achsen 39 sind an an der Hauptträgerplatte 35 angebrachten Winkelstücken 41 galagert. Zwischen jeder der Achsen 39 und der zugehörigen Walze 40 ist eine vorgespannte Drehfeder 42 verspannt, wobei die Drehfedern 42 der beiden Walzen 40 in entgegengesetzten Richtungen wirksam sind. Die Drehfeder 42 der linken Walze 40 sucht diese entgegengestzt dem Uhrzeigersinn zu drehen, während die Drehfeder 42 der rechten Walze 40 letztere im Uhrzeigersinn zieht. Dies hat zur Folge, daß bei Verschiebung des Gehäusekastens 36 bzw. der Platine 23 nach rechts in Fig.1 das rechte Rolltuch 37 unter Wirkung der Feder 42 der rechten Walze 40 auf diese aufgewickelt wird und das linke Rolltuch von der linken Walze 40 unter Spannung der dieser zugeordneten Feder 42 abgewickelt wird. Bei Verschiebung des Gehäusekastens 36 nach links wird dann das linke Rolltuch 37 unter der Wirkung der linken Feder 42 auf die linke Walze 40 aufgewickelt und das rechte Rolltuch von der rechten Walze abgewickelt. Die beiden Federn 42 sorgen dabei dafür, daß beide Rolltücher 37 immer straff gespannt sind.

Trotz dieser Anordnung würde es vorkommen, daß die oberen und unteren Rolltuchkanten sich mit der Zeit verdehnen und von der Hauptträgerplatte 35 stellenweise wegklaffen, so daß dann die Lichtsicherheit zwischen der Abbildungseinheit 36 und der Hauptträgerplatte 35 nicht mehr gewährleistet wäre. Um ein derartiges Wegklaffen mit Sicherheit zu vermeiden, sind in X-Richtung ober- und unterhalb der großen Abbildungsöffnung 35a, der Bildfeldblende 23a zugewandt, Permanentmagnetstreifen 43 zwischen den Achsen 39 an der Hauptträgerplatte 35 angebracht. An der der Hauptträgerplatte 35 abgewandten Seite der Rolltücher 37 sind, den Magnetstreifen 43 gegenüberliegende, biegsame, magnetisierbare Metallstreifen 44 befestigt, vorzugsweise angeklebt. Die Matallstreifen 44 sind so dünn und biegsam, daß sie sich ohne weiteres zusammen mit den Tüchern 37 auf die Walzen 40 aufwickeln lassen, jedoch durch die Permanentmagnetstreifen 43 ständig magnetisiert und von letzteren dann angezogen werden. Durch die glatt an den Permanentmagnetstreifen 43 anliegenden magnetisierbaren

A-G 5016

Streifen 44 liegen auch die Längskanten der Rolltücher 37 zwischen beiden Streifen 43, 44 eingeklemmt und glatt und lichtdicht an der Hauptträgerplatte 35 an. Die beschriebene Rolltuchanordnung 37, 40, 42, 43, 44 ist daher so ausgebildet, daß sie mit einfachen, platzsparenden Mitteln absolut lichtsicher trotz der Verschiebung der Abbildungseinheit funktioniert.

Grundsätzlich wäre es möglich, die magnetisierbaren Streifen 44 statt dessen auch auf der den Permanentmagnetstreifen zugewandten Seite der Rolltücher anzubringen. Die bessere Lösung stellt jedoch die Einklemmung der Rolltücher zwischen beiden Streifen 43 und 44 dar. Außerdem wäre es auch möglich, die Filzstreifen 23b zur Lichtsicherung zwischen Bildfensterblende 23a und Hauptträgerplatte 35 ebenfalls mit den Permanentmagnetstreifen 43 gegenüberliegenden magnetisierbaren Streifen zu verbinden, wobei die Platine 23 selbst aus magnetisierbarem Material bestehen könnte.

A-G 5016

Ansprüche

1. Lichtabdichtung zwischen einer in einer Koordinatenrichtung (X) verschiebbaren Abbildungseinheit und einer eine über den möglichen Verschiebebereich der Abbildungen der Abbildungseinheit reichende Belichtungsöffnung aufweisenden, festen Trägerplatte, hinter der eine Filmbühne gelagert ist, in einer Vorrichtung zur Herstellung fotografischer Aufnahmen von auf einem Bildschirm eines Monitors erscheinenden Röntgen- oder Ultraschall- oder dergleichen Bildern, wobei die Abbildungseinheit ein zwischen dem Bildschirm und der Filmbühne einstellbares Objektiv und ein den Raum zwischen Bildschirm und Trägerplatte lichtdicht abschließendes Gehäuseteil aufweist, dadurch gekennzeichnet, daß längs beider zur Verschieberichtung (X) senkrechten, trägerplattenseitigen Kanten des Gehäuseteils (36 bzw. 23) über die Belichtungsöffnung (35a) hinaus reichende, lichtdichte Bahnen oder Tücher (37) befestigt sind, die auf gegenläufig vorgespannte Walzen (40) bei Verschiebung des Gehäuseteils (36 bzw. 23) auf- bzw. abwickelbar sind, und daß längs der in Verschieberichtung (X) verlaufenden Ränder der Tücher (37) biegsame Streifen (44) aus magnetisierbarem Material befestigt sind, denen Permanentmagnetstreifen (43) an der Trägerplatte (35) gegenüberliegen.

A-G 5016

2. Lichtabdichtung nach Anspruch 1, dadurch gekennzeichnet, daß die Tücher (37) mit ihren nicht aufgerollten Bereichen zwischen den Magnetstreifen (43) und den magnetisierbaren Streifen (44) eingeklemmt liegen.

3. Lichtabdichtung nach einem der vorhergehenden Ansprüche, dadurch gekennzeichnet, daß längs der in Verschieberichtung (X) verlaufenden Kanten des Gehäuseteils (36 bzw. 23) im Bereich der Magnetstreifen (43) Filz- oder Plüsch-Lichtabdichtungsstreifen (23b) befestigt sind, die gegen die Trägerplatte (35) bzw. den zugeordneten Magnetstreifen (43) gedrückt werden.

4. Lichtabdichtung nach einem der vorhergehenden Ansprüche, dadurch gekennzeichnet, daß die in Verschieberichtung (X) verlaufenden Kanten des Gehäuseteils (36 bzw. 23) ebenfalls aus magnetisierbarem Material bestehen, auf dem die Lichtabdichtungsstreifen (23b) aufgebracht sind.

Hierzu 2 Blatt Zeichnungen

A-G 5016

0188201

1/2

FIG. 1

FIG. 2

FIG. 3

FIG. 4

A-G 50

Europäisches
Patentamt

EUROPÄISCHER RECHERCHENBERICHT

01.88.201

Nummer der Anmeldung

EP 86 10 0091

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | US-A-1 892 683  (R.R. ROBERTSON) <br> * Seiten 1-5; Figuren 1-13 * | 1 | G 03 B  15/00 <br> G 03 B  27/46 |
| A | US-A-4 027 315  (H.H. BARNEY) <br> * Spalten 3-16; Figuren 1-5 * | 1 | |
| A | US-A-2 306 885  (H.G. KLEMM et al.) <br> * Seiten 1-3; Figuren 1-14 * | 1 | |
| A | DE-A-3 019 559  (DAINIPPON SCREEN MFG. CO.) <br> * Seite 7; Figur 3 * | 1 | |
| A | DE-B-1 163 658  (KLIMSCH & CO.) <br> * Spalten 5-7; Figur 1 * | 1 | RECHERCHIERTE SACHGEBIETE (Int. Cl.4) <br><br> G 03 B |

Der vorliegende Recherchenbericht wurde für alle Patentansprüche erstellt

| Recherchenort <br> DEN HAAG | Abschlußdatum der Recherche <br> 22-04-1986 | Prüfer <br> BOEYKENS J.W. |
|---|---|---|

KATEGORIE DER GENANNTEN DOKUMENTE

X von besonderer Bedeutung allein betrachtet
Y von besonderer Bedeutung in Verbindung mit einer anderen Veröffentlichung derselben Kategorie
A technologischer Hintergrund
O nichtschriftliche Offenbarung
P Zwischenliteratur
T der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument ·
L : aus andern Gründen angeführtes Dokument

& : Mitglied der gleichen Patentfamilie, übereinstimmendes Dokument

EPA Form 1503 03.82